# EUROPEAN PATENT APPLICATION

(11) **EP 1 909 443 A1**
(43) Date of publication of application: **09.04.2008**
(21) Application number: 06761463.6
(22) Date of filing: 17.07.2006
(51) Int. Cl.: H04L 12/58

(54) **METHOD AND SYSTEM BY WHICH INSTANT MESSAGE USER CAN USE INSTANT MESSAGE SYSTEM CHAT ROOM TO WHICH USER UNBELONGS**

(30) Priority: 18.07.2005 CN 200510084197
(71) Applicant: Huawei Technologies Co., Ltd., Longgang District Shenzhen 518129 (CN)
(72) Inventor: MU, Lunjian, Shenzhen, Guangdong 518129 (CN); WANG, Jue, Shenzhen, Guangdong 518129 (CN)
(74) Representative: Collin, Jérôme
(86) International application number: PCT/CN2006/001728
(87) International publication number: WO 2007/009369

(57) **Abstract**

A method and system by which an instant message user can use a instant message system chat room to which the user unbelongs, the method comprises: configuring a interconnect server connected with the server of the different instant message system, and then, if the user terminal needs to join the instant message system chat room to which the user unbelongs, the server of the instant message system to which the user belongs forwards the message to the interconnect server (6), the interconnect server interacts with the server of the instant message system to which the chat room belongs (8). After getting a response message returned, the interconnect server sends the response message to the user terminal through the server of the instant message system to which the user terminal belongs (10,11). When the user terminal confirms that the join is successful, the user terminal uses the chat room through the interconnect server and the server of the instant message system to which the chat room belongs.

## Description

### Field of the Invention

The present invention relates to the field of mobile communication technologies, in particular to a chat room service in an instant message system in the Internet, and in more particular to a method and system for using a chat room in an instant message system by an instant message user not belonging to the instant message system.

### Background of the Invention

Currently, mobile communication networks and the Internet are all provided with an instant message system for instant communication. Here, the mobile communication networks include existing 2G, 2.5G networks and a multimedia sub-domain and also a 3G network to be soon put into use.

The instant message system in these networks can provide service of chart room. A so-called chart room refers to a session room consisted of two or more users in which information exchanges, comments, and statements of viewpoints on a specific topic are performed. A user who enters the chat room can present his viewpoint in the chat room, and other users can have a look at the viewpoint that the user presents in the chat room after they enter the chat room. If a user quits the chat room or does not join in the chat room, then he can not have a look at any viewpoint or comment that another user presents in the chat room.

There are mainly two types of Instant Messages (IM) at present. One type is an Instant Message and Presence Service (IMPS) based upon the Wireless Village (WV) protocol, which is primarily applicable to traditional communication networks. The other type is an instant message service based upon the Session Initiation Protocol (SIP)/SIP Instant Messaging and Presence Leveraging Extensions (SIMPLE), which is primarily applicable to the next generation network based upon an IP Multimedia Subsystem (IMS). Of course, there are some private protocols which also provide some other instant message services. Instant message systems corresponding to the respective types of instant messages each provide service of chat room.

For a user using a chat room, no matter which type of instant message adopted for the chat room, any protocol on which the instant messages are based will be transparent to him. In other words, it is not necessary for the user to know which protocol the instant messages adopted for the chat room are based on. However, no matter which protocol the instant messages are based on, currently it is only guaranteed that a user belonging to the present instant message system can use a chat room provided in the instant message system but other users can not. Obviously, this is undesirable for the users. A user wishes that he can have access to chat rooms in various systems. For example, a chat room in an instant message system of the WV Instant Message and Presence Service (WV IMPS) shall be allowed to be used by both a WV IMPS user and an SIP/SIMPLE IM user.

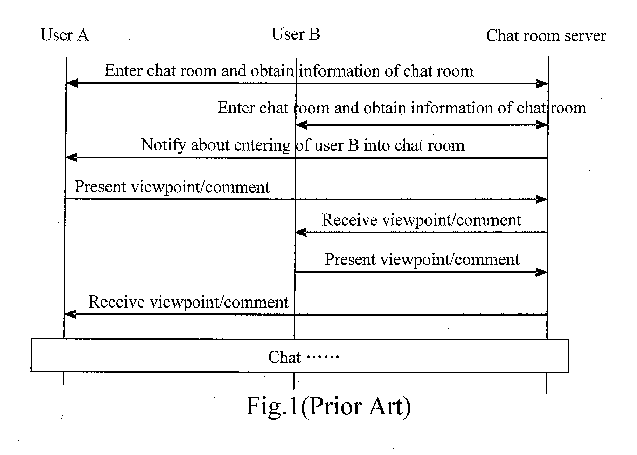

A timing diagram of message flow in which currently users in the same instant message system have a chat through a chat room is as illustrated in Figure 1, where the users have to have a chat through interaction with a chat room server.

### Summary of the Invention

According to embodiments of the present invention, there is provided a method for using a chat room in an instant message system by an instant message user not belonging to the instant message system so that a user in any instant message system can use service of chat room provided in an instant message system to which the user does not belong.

According to embodiments of the present invention, there is further provided a system for using a chat room in an instant message system by an instant message user not belonging to the instant message system, which enables a user in any instant message system to use service of chat room provided in an instant message system to which the user does not belong.

Technical solutions of the present invention are implemented as follows.

A method for using a chat room in an instant message system by an instant message user not belonging to the instant message system includes configuring an interworking server connected with servers in different instant message systems, and the method further includes:
after receiving, by a server in an instant message system, from a user terminal a request message for joining in a chat room in a system to which the user terminal does not belong, relaying the request message to the interworking server;
converting, by the interworking server, the received request message into a request message identifiable by the instant message system to which the chat room belongs, and sending the converted request message to a server in the instant message system to which the chat room belongs;
after receiving, by the server in the instant message system to which the chat room belongs, the request message, determining whether to accept the joining request from the user terminal, and returning a corresponding response message to the interworking server;
converting, by the interworking server, the response message into a response message identifiable by the instant message system to which the user terminal belongs, sending the converted response message to the server in the instant message system to which the user belongs, and sending, by the server, the received response message to the user terminal; and
after determining, by the user terminal, successful joining according to the received response message, sending a message related to the chat room to the interworking server, converting, by the interworking server, the received message and sending the converted message to the server in the instant message system to which the chat room belongs, receiving, by the interworking server, a message related to the chat room sent to the user terminal from the server in the instant message system to which the chat room belongs, and converting, by the interworking server, the received message and sending the converted message to the user terminal.

A system for using a chat room in an instant message system by an instant message user not belonging to the instant message system includes a server and a user terminal in an instant message system. Here, the user terminal has access to a chat room in an instant message system to which the user terminal belongs through a server in the instant message system to which the user terminal belongs. The system further includes an interworking server connected with servers in different instant message systems, and here,
the user terminal in the instant message system is further adapted to send a request message for joining in a chat room in an instant message system to which the user terminal does not belong to the server in the instant message system to which the user terminal belongs according to user input/inquired information on the chat room, to receive a response message returned from the server in the instant message system to which the user terminal belongs, to send a message related to the chat room to the interworking server, and to receive a message related to the chat room returned from the interworking server;
the server in the instant message system is further adapted to relay to the interworking server the request message for joining in the chat room in the instant message system to which the user terminal does not belong, which is sent from the user terminal in the instant message system to which the user terminal belongs, to send the response message returned from the interworking server to the user terminal, to determine whether to allow a user terminal not belonging to the instant message system to join in a chat room in the present instant message system according to a request message of the user terminal for joining in the chat room, which is sent from the interworking server, and to return a corresponding response message to the interworking server; and
the interworking server is adapted to convert the request message relayed from the server in the instant message system to which the user terminal belongs and a message related to the chat room sent from the user terminal into a message identifiable by the instant message system to which the chat room belongs, to send the converted message to a server in the instant message system to which the chat room belongs, to convert the response message returned from the server in the instant message system to which the chat room belongs into a message identifiable by the instant message system to which the user terminal belongs, and to send the converted message to the server or the user terminal in the instant message system to which the user terminal belongs.

As can be seen from the above solutions, by configuring the interworking server for message conversion, the solutions according to embodiments of the present invention enable users in different types of instant message systems to have a chat in the same chat room, thereby extending the scope of intercommunion, bringing a lot of convenience for the users, and improving the experience of the users. Therefore, the users will be more willing to use the service of chat room, and thus the user utilization ratio of the service of chat room can be improved and operators can earn more profits.

### Brief Description of the Drawings

Figure 1 is a timing diagram of message flow for implementing a chat in a chat room in the prior art;

Figure 2-1 is a flow chart for implementing a solution according to embodiments of the present invention;

Figure 2-2 is a flow chart illustrating a particular implementation of a solution according to an embodiment of the present invention;

Figure 3 is a timing diagram of message flow illustrating a particular solution according to an embodiment of the present invention;

Figure 4 is a timing diagram of message flow illustrating that an SIP/SIMPLE IM user requests for joining in a chat room of an instant message system to which the user does not belong according to an embodiment of the present invention;

Figure 5 is a timing diagram of message flow illustrating that an SIP/SIMPLE IM user presents an opinion through an Message Session Relay Protocol (MSRP) channel according to an embodiment of the present invention;

Figure 6 is a timing diagram of message flow illustrating that an SIP/SIMPLE IM user presents an opinion through a server in an instant message system to which the user belongs according to an embodiment of the present invention;

Figure 7 is a timing diagram of message flow illustrating that a WV IMPS user requests for joining in a chat room in an instant message system to which the user does not belong according to an embodiment of the present invention;

Figure 8 is a timing diagram of message flow illustrating that an interworking server interacts with an SIP/SIMPLE IM server through an MSRP channel to present an opinion of a user according to an embodiment of the present invention;

Figure 9 is a timing diagram of message flow illustrating that an interworking server interacts with an SIP/SIMPLE IM server through an existing channel to present an opinion of a user according to an embodiment of the present invention;

Figure 10 is a schematic structure diagram illustrating a system according to embodiments of the present invention;

Figure 11 is a schematic structure diagram illustrating a user terminal according to embodiments of the present invention;

Figure 12 is a schematic structure diagram illustrating a server according to embodiments of the present invention; and

Figure 13 is a schematic structure diagram illustrating an interworking server according to embodiments of the present invention.

### Detailed Description of the Invention

The present invention will be described in further details by way of embodiments with reference to the drawings to make the objects, solutions and advantages of the present invention more apparent.

The solutions according to embodiments of the present invention primarily add an interworking server connected with servers in different instant message systems. Each instant message system determines whether a chat room which a user belonging to the instant message system requests for joining in is a chat room in the instant message system to which the user belongs. If not, the instant message system relays a request message and a subsequent chat related message from the user to a server in an instant message system to which the chat room belongs through the interworking server and sends a message returned from the server in the instant message system to which the chat room belongs to a terminal of the user through the interworking server.

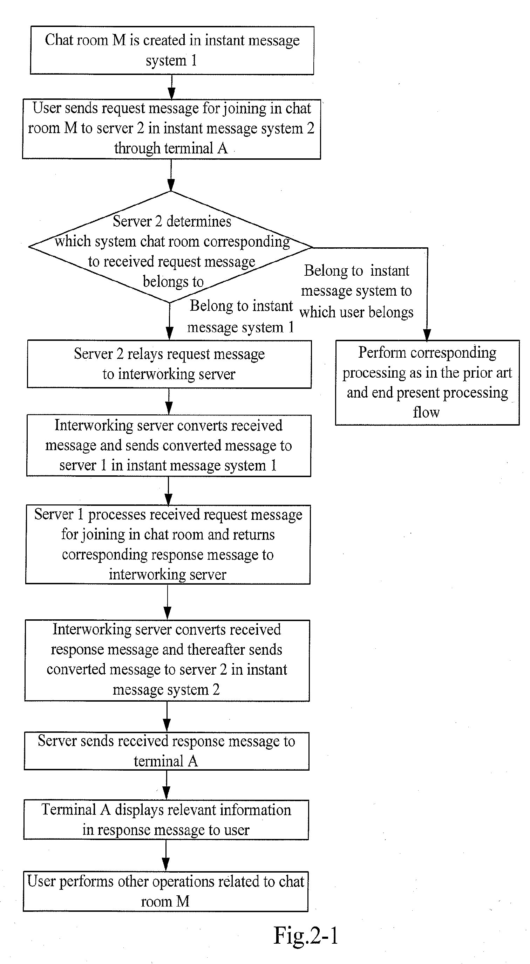

The solutions according to embodiments of the present invention are applicable to an instant message system based upon any protocol, the implementation flow of which is illustrated in Figure 2-1.

Since specific implementations between various instant message systems are the same, only a process between an IMPS instant message system and an SIP/SIMPLE instant message system will be described below. Firstly, joining of an SIP/SIMPLE IM user into a chat room in a WV IMPS instant message system will be described by way of an example.

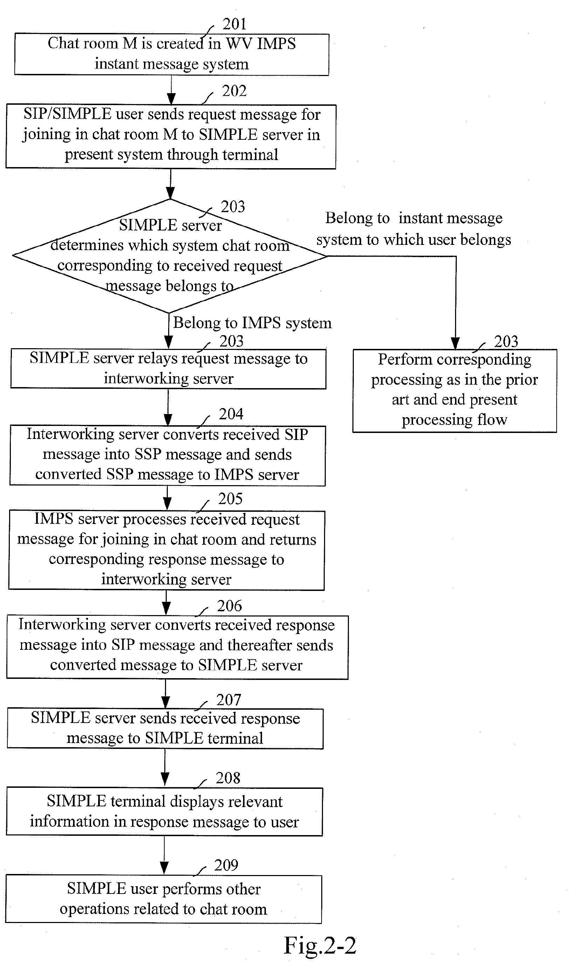

An implementation flow in which an SIP/SIMPLE IM user joins in a chat room in a WV IMPS instant message system according to an embodiment of the present invention is illustrated in Figure 2-2.

Block 201: A chat room M is created in a WV IMPS instant message system.

Block 202: An SIP/SIMPLE IM user sends a request message for joining in the chat room M to an SIP/SIMPLE IM server in an instant message system to which the user belongs through a terminal.

The SIP/SIMPLE IM user may send the request message to the SIP/SIMPLE IM server through inputting directly the name of the chat room M at the terminal or through inquiring in the terminal about the chat room M in the form of searching.

Block 203: The SIP/SIMPLE IM server determines which system the chat room corresponding to the received request message belongs to, and if it is the instant message system to which the user belongs, the server performs corresponding processing as that in the prior art; otherwise, if it is the WV IMPS instant message system, the server relays the request message to an interworking server.

The request message sent from the user terminal is an SIP/SIMPLE message. Here, the SIMPLE message is an extended message of the SIP including a message of SIP: MESSAGE.

In the present Block, the SIP/SIMPLE IM server firstly determines whether the received message is a message related to service of chat room before it makes a determination to the request for joining in the chat room. Specifically, it may be determined whether an identifier such as a name, a domain name or a special indicator of a chat room is present in the received message or whether a session type in the message is a chat, and then whether the chat room is a chat room in the instant message system to which the user belongs according to the name, the domain name or the special indicator of the chat room. For example, if the domain name of a chat room is WV: conf1@IMPS.com, it may be determined that the chat room belongs to the WV IMPS system.

Block 204: The interworking server converts the received SIP/SIMPLE message into a WV SSP (Server to Server Protocol) message and sends the converted WV SSP message to an IMPS server. Here, the WV SSP message is a message specifically relayed between servers in an IMPS instant message system.

For conversion of the SIP/SIMPLE message into the WV SSP message, part of a message head in the SIP/SIMPLE message may be put into message contents of the WV SSP message or the message head in the SIP/SIMPLE message may be converted into an HTTP message head.

Block 205: the WV IMPS server performs corresponding processing on the received request message for joining in the chat room and returns a corresponding response message to the interworking server.

If the WV IMPS server allows the SIP/SIMPLE IM user to join in the chat room M, the response message includes information of allowed joining; otherwise, the response message includes information of denied joining. The response message is a WV SSP message.

Since WV IMPS server is required to process the received request for joining in the chat room, the WV IMPS server shall be capable of processing and identifying the SIP/SIMPLE IM user. For example, the IMPS server may determine whether the SIP/SIMPLE IM user can join in the chat room, i.e., make a determination according to whether the SIP/SIMPLE IM user is a user in a black list or white list, whether the number of users in the chat room reaches an upper limit, or a control policy for the chat room, etc.

Further, the WV IMPS server may also send to other users in the chat room a message regarding joining of the SIP/SIMPLE IM user after allowing the SIP/SIMPLE IM user to join in the chat room M.

Block 206: The interworking server converts the received response message into an SIP/SIMPLE message and thereafter sends the SIP/SIMPLE message to the SIP/SIMPLE IM server.

Block 207: The SIP/SIMPLE IM server sends the received response message to the SIP/SIMPLE IM terminal.

Block 208: The SIP/SIMPLE IM terminal displays the relevant information in the response message to the user.

If the response message is a success message, the SIP/SIMPLE IM terminal may display information of the chat room to the user; otherwise, if the response message is a failure message, the SIP/SIMPLE IM terminal may display a failure reason to the user and may also let the user have another try or provide other relevant operations.

Block 209: The SIP/SIMPLE IM user performs other operations related to the chat room.

For example, after entering the chat room, the SIP/SIMPLE IM user may send a chat message, receive a chat message, quit the chat room, obtain information on members in the chat room, obtain information on members newly joining in the chat room, subscribe to a notification about change of the chat room, invite others to join in the chat room, etc.

Of course, any operation performed by the SIP/SIMPLE IM user after entering the chat room shall be message-converted and relayed through the interworking server. The interworking server shall store relevant session information upon reception of the response message of allowed joining returned from the WV IMPS server in order to be capable of processing the response message and a subsequent chat message from the WV IMPS server. If WV IMPS server does not allow joining, the interworking server does not have to store the relevant session information.

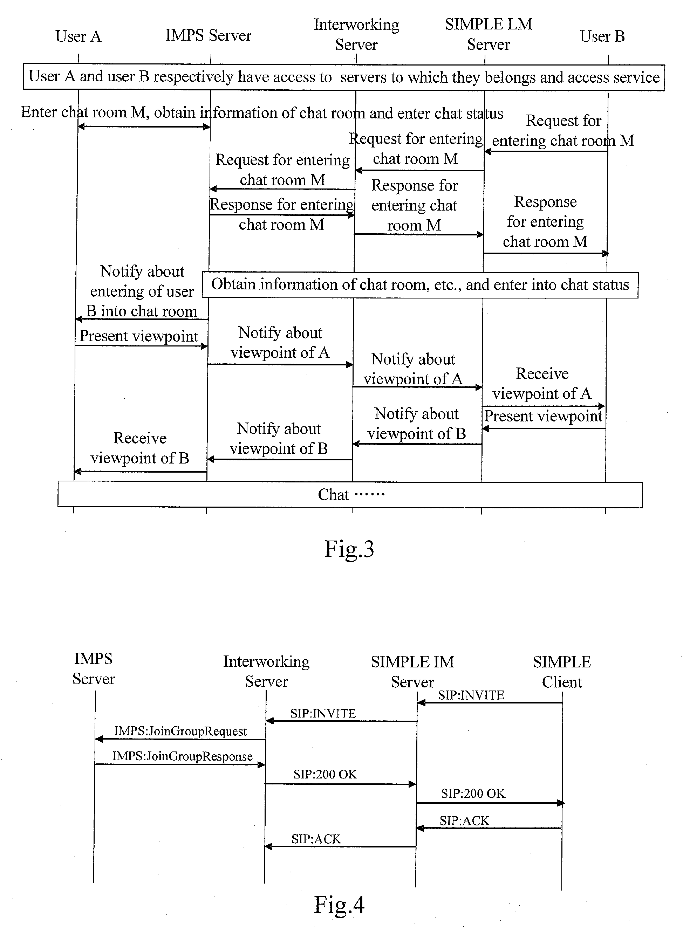

Here, when the SIP/SIMPLE IM user performs various operations after entering the chat room, relevant messages of the respective operations may be sent to the interworking sever through the SIP/SIMPLE IM server, and the SIP/SIMPLE IM server may relay a message returned from the interworking server to the SIP/SIMPLE IM terminal. A timing diagram of complete message flow illustrating such an implementation is illustrated in Figure 3. Apparently, this implementation increases the burden over the SIP/SIMPLE IM server.

In view of this, the solutions according to embodiments of the present invention further provide another implementation in which the SIP/SIMPLE IM user sends a request for establishing a data transmission channel dedicated for transmission of data between the terminal and the interworking server while sending the request for joining in the chat room to the SIP/SIMPLE IM server through the terminal. The interworking server may establish the data transmission channel after the WV IMPS server returns the response message allowing the user terminal to join in the chat room M, and return a message of a success or failure in establishing the channel when returning a response message to the terminal. If the data transmission channel is established with success, the SIP/SIMPLE IM user may perform message-interaction with the interworking server directly through the channel. Of course, if message-interaction is performed through the channel, a corresponding message is required for interaction between the SIP/SIMPLE IM terminal and the interworking server; otherwise, SIP/SIMPLE message are still required for interaction. If the data transmission channel is not established with success, relaying through the SIP/SIMPLE IM server is still required. Here, unsuccessful establishment may be due to unsuccessful negotiation about the channel, failure of the interworking server to support the channel, etc. The established data transmission channel may be an MSRP channel.

The data transmission channel is established as above particularly between the SIP/SIMPLE IM terminal and the interworking server, i.e. between the user terminal and the interworking server. Actually, the data transmission channel may also be established between the interworking server and the server in the system to which the chat room belongs since the data transmission channel is a channel dedicated for transmission of information with a large traffic such as chat information. The latter data transmission channel has not been established in the above embodiment mainly in view of that the WV IMPS instant message system does not support such a data transmission channel. For an instant message system to which the user does not belong, the data transmission channel may be established between the interworking server and the server in the system to which the chat room belongs only if the data transmission channel is supported. The established data transmission channel may be an MSRP channel as well.

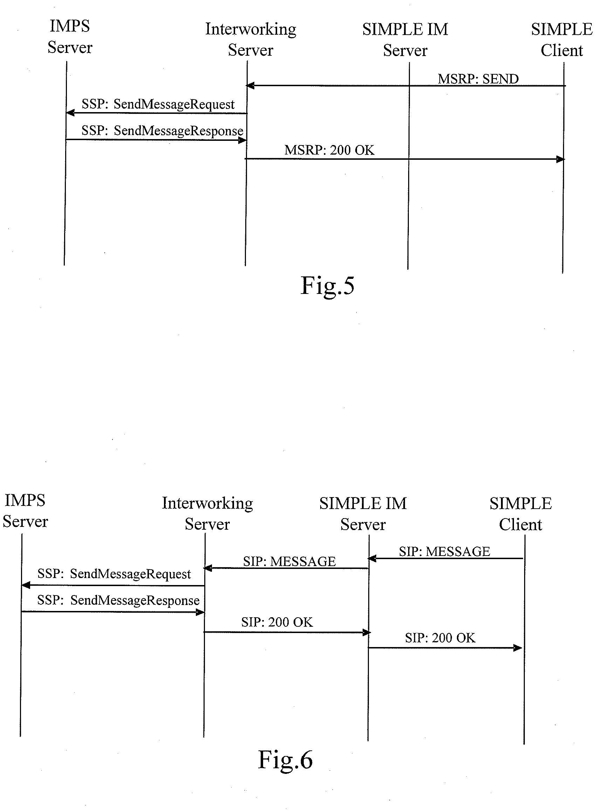

A process in which the SIP/SIMPLE IM user joins in the WV IMPS chat room has been described as above in connection with the flow chart. In the implementation, a timing diagram of message flow illustrating that the SIP/SIMPLE IM user requests for joining in the WV IMPS chat room is illustrated in Figure 4, a timing diagram of message flow illustrating that the SIP/SIMPLE IM user enters the chat room and presents an opinion through an MSRP channel established between the terminal and the interworking server is illustrated in Figure 5, and a timing diagram of message flow illustrating that the SIP/SIMPLE IM user presents an opinion through relaying by the SIP/SIMPLE IM server is illustrated in Figure 6.

As illustrated in Figure 4, the timing diagram of message flow illustrating that the SIP/SIMPLE IM user requests for joining in the WV IMPS chat room is as follows.

A: The SIP/SIMPLE IM user sends a message of SIP: INVITE requesting for joining in the chat room M to the SIP/SIMPLE IM server through the terminal.

An example of the message of SIP: INVITE is as follows.

```
            INVITE wv:conf1@IMPS.com SIP/2.0
             To: < wv:conf1@IMPS.com>
             From: simpleA <sip:UserA@SIMPLE.com>;tag=32331
            Call-ID: d432fa84b4c76e66710
             CSeq: 45 INVITE
             Contact: <sip:UserA@SIMPLE.com; sessiontype=chat>; isfocus
             Allow: INVITE, ACK, CANCEL, BYE, REFER, MESSAGE,
 SUBSCRIBE, NOTIFY
             Allow-Events: dialog
             Content-Type: application/sdp
              v=0
              c=IN IP4 UserA.SIMPLE.com
              t=0 0
              m=message 7777 msrp/tcp *
              a=accept-types:text/plain
              a=path:msrp://UserA.SIMPLE.com:7777/iau39;tcp
```

B: The SIP/SIMPLE IM server relays the message of SIP: INVITE to the interworking server.

Upon reception of the message of SIP: INVITE, the SIP/SIMPLE IM server analyzes and determines that the message is a message for relaying to the WV IMPS server according to the name of the chat room wv: conf1@IMPS.com carried in the message, and therefore relays the message to the interworking server.

C: Upon reception of the message, the interworking server determines that it is a request message for joining in the chat room wv: conf1@IMPS.com according to sessiontype = chat and the name of the chat room carried in the message, and therefore converts the SIP/SIMPLE message into a WV SSP message in the WV IMPS, i.e. a message of JoinGroupRequest.

An example of the message of IMPS: JoinGroupRequest is as follows.

```
   POST 10.164.5.254:8080 HTTP/1.1
   Content-Type: application/vnd.wv.ssp.xml
   Content-Length: 450
   <WV-SSP-Message
 xmlns="http://www.openmobilealliance.org/DTD/WV-SSP1.2">
   <Session sessionID="d432fa84b4c76e66710@SIMPLE.com">
   <Transaction mode="Request" transactionID="45">
   <JoinGroup-Request GroupID = "wv:conf1@IMPS.com" JoinedRequest = "F"
 SubscribeNotification = "T">
   <MetaInfo clientOriginated="Yes">
   <Requestor>
   <User userID="sip:UserA@SIMPLE.com ">
   </User>
   </Requestor>
   </MetaInfo>
   </ JoinGroup-Request >
   </Transaction>
   </Session>
   </WV-SSP-Message>
```

D: Upon reception of the joining request, the WV IMPS server processes the request for joining in the chat room, i.e. the message of JoinGroupRequest. Assuming that the WV IMPS server determines joining of the user with success, the server returns to the interworking server a message of IMPS: JoinGroupResponse indicating successful joining.

An example of the message of IMPS: JoinGroupResponse is as follows.

```
   HTTP/1.1 200 OK
    Server: Resin/2.1.12
    Content-Length: 276
   Date: Thu, 26 May 2005 02:41:10 GMT
   <WV SSP-Message
 xmlns="http://www.openmobilealliance.org/DTD/WV-SSP1.2">
   <Session sessionID="d432fa84b4c76e66710@SIMPLE.com">
   <Transaction mode="Response" transactionID="45">
   <JoinGroup-Response>
   <Status code="200"/>
   </ JoinGroup-Response >
   </Transaction>
   </Session>
   </WV-SSP-Message>
```

E: Upon reception of the message of IMPS: JoinGroupResponse, the interworking server returns a 200 OK message of the SIP to the SIP/SIMPLE IM server.

An example of the message of SIP: 200 OK is as follows.

```
            SIP/2.0 200 OK
             To: < wv:conf1@IMPS.com>; tag=733413
             From: simpleA <sip:UserA@SIMPLE.com>;tag=32331
            Call-ID: d432fa84b4c76e66710
             CSeq: 45 INVITE
             Contact: <sip:UserA@SIMPLE.com; sessiontype=chat>; isfocus
             Allow: INVITE, ACK, CANCEL, BYE, REFER, MESSAGE,
 SUBSCRIBE, NOTIFY
            Allow-Events: dialog
             Content-Type: application/sdp
              v=0
              s=-
              c=IN IP4 conf1.IMPS.com
              t=0 0
            m=message 8888 msrp/tcp *
              a=accept-types:text/plain
               a=path:msrp://conf1.IMPS.com:8888/9di4ea;tcp
```

F: Upon reception of the message of SIP: 200 OK, the SIP/SIMPLE IM server relays the message to the SIMPLE IM terminal.

G: Upon reception of the message of SIP: 200 OK, the SIP/SIMPLE IM terminal processes the message and sends to the SIP/SIMPLE IM server a message of SIP: ACK acknowledging reception of the message.

H: The SIP/SIMPLE IM server relays the message of SIP: ACK to the interworking server and the interworking server stores relevant information of the session.

If in the previous process, the SIP/SIMPLE IM user requests for establishing an MSRP channel between the user and the interworking server, and the interworking server has established the MSRP channel, then the SIP/SIMPLE IM user presents an opinion via the message flow illustrated in Figure 5. The procedure is as follows.

A: The SIP/SIMPLE IM user sends a message of MSRP: SEND to the interworking server through a client so as to send chat information via the message.

An example of the message MSRP: SEND is as follows.

```
   MSRP d93kswow SEND
   To-Path:msrp://conf1.IMPS.com:8888/9di4ea;tcp
   From-Path:msrp://UserA.SIMPLE.com:7777/iau39;tcp
   Message-ID: 12339sdqwer
   Content-Type: text/plain
   Hi, I'm a SIMPLE userA!
   -------d93kswow$
```

B: The interworking server converts the MSRP message into a WV SSP message identifiable by the WV IMPS server, i.e. a message of SSP: SendMessageRequest, and sends the converted message to the WV IMPS server.

An example of the message of SSP: SendMessageRequest is as follows.

```
   POST 10.164.5.254:8080 HTTP/1.1
   Content-Type: application/vnd.wv.ssp.xml
   Content-Length: 693
   <WV-SSP-Message
 xmlns="http://www.openmobilealliance.org/DTD/WV-SSP1.2">
    <Session sessionID="d432fa84b4c76e66710@IMPS.com">
    <Transaction mode="Request" transactionID="45">
    <SendMessage-Request DeliveryReport = "F">
    <MetaInfo clientOriginated="Yes">
    <Requestor>
    <User userID="sip:UserA@SIMPLE.com ">
    </User>
   </Requestor>
   </MetaInfo>
   <MessageInfo messageID = 12339sdqwer contentType = "text/plain" contentSize
 = 23>
   <Recipient>
   <Group>
   <ScreenName>
   <GroupID> wv:conf1@IMPS.com </GroupID>
   </S creenName>
   </Group>
   </Recipient>
   <Sender>
   <User>
   <UserID>wv:john@smith.com</UserID>
   </User>
   </Sender>
   </MessageInfo>
   <ContentData>
   Hi, I'm a SIMPLE userA!
   </ContentData>
   </SendMessage-Request>
   </Transaction>
   </Session>
   </WV SSP-Message>
```

C: Upon reception of the chat related message, the WV IMPS server sends the message to the user having entered the chat room and sends to the interworking server a WV SSP response message, i.e. a message of SSP: SendMessageRequest.

An example of the message is as follows.

```
    HTTP/1.1 200 OK
    Server: Resin/2.1.12
    Content-Length: 326
   Date: Thu, 26 May 2005 02:41:10 GMT
   <WV-SSP-Message
 xmlns="http://www.openmobilealliance.org/DTD/WV-SSP1.2">
   <Session sessionID="d432fa84b4c76e66710@IMPS.com">
   <Transaction mode="Response" transactionID="45">
   <SendMessage-Response MessageID=12339sdqwer>
   <Status code="200"/>
   </ SendMessage-Response >
   </Transaction>
   </Session>
   </WV-SSP-Message>
```

D: Upon reception of the message of SSP: SendMessageRequest, the interworking server responds to the terminal of the SIP/SIMPLE IM user with a corresponding MSRP message, i.e. a message of MSRP: 200 OK.

An example of the message of MSRP: 200 OK is as follows.

```
   MSRP d93kswow 200 OK
   To-Path:msrp://conf1.IMPS.com:8888/9di4ea;tcp
   From-Path:msrp://UserA.SIMPLE.com:7777/iau39;tcp
   ------- d93kswow$
```

If the interworking server fails to establish the MSRP channel in the previous process, the SIP/SIMPLE IM user presents an opinion via the message flow illustrated in Figure 6. The procedure is as follows.

A: The SIP/SIMPLE IM user sends a message of SIP MESSAGE to the SIP/SIMPLE IM server through a client so as to present an opinion to the chat room.

An example of the message SIP: MESSAGE is as follows.

```
     MESSAGE wv:conf1@IMPS.com SIP/2.0
      Max-Relays: 70
      From: sip:userA@SIMPLE.com; tag=49583
      To: wv:conf1@IMPS.com
    Call-ID: d432fa84b4c76e66710
    CSeq: 51 MESSAGE
      Content-Type: text/plain
      Content-Length: 23
   Hi, I'm a SIMPLE userA!
```

B: The SIP/SIMPLE IM server determines that the message is a message for relay to the WV IMPS server and relays the message to the interworking server through a process such as policy control.

C: The interworking server determines that the received message is a message for relay to the WV IMPS server and thereafter converts the SIP/SIMPLE message into a WV SSP message of the WV IMPS, i.e. a message of SSP: SendMessageRequest, and sends the converted message to the WV IMPS server.

An example of the message of SSP: SendMessageRequest is as follows.

```
   POST 10.164.5.254:8080 HTTP/1.1
   Content-Type: application/vnd.wv.ssp.xml
   Content-Length: 693
   <WV-SSP-Message
 xmlns="http://www.openmobilealliance.org/DTD/WV-SSP1.2">
   <Session sessionID="d432fa84b4c76e66710@IMPS.com">
   <Transaction mode="Request" transactionID="45">
   <SendMessage-Request DeliveryReport = "F">
   <MetaInfo clientOriginated="Yes">
   <Requestor>
   <User userID="sip:UserA@SIMPLE.com ">
   </User>
   </Requestor>
   </MetaInfo>
   <MessageInfo messageID = 1 contentType = "text/plain" contentSize = 23>
    <Recipient>
    <Group>
    <ScreenName>
    <GroupID> wv:conf1@IMPS.com </GroupID>
    </S creenName>
   </Group>
   </Recipient>
   <Sender>
   <User>
   <UserID>wv:john@smith.com</UserID>
   </User>
   </Sender>
   </MessageInfo>
   <ContentData>
   Hi, I'm a SIMPLE userA!
   </ContentData>
   </SendMessage-Request>
   </Transaction>
   </Session>
   </WV-SSP-Message>
```

D: Upon reception of the message of SSP: SendMessageRequest, the WV IMPS server sends a message related to the chat information to the user having entered the chat room and returns a message of SSP: SendMessageResponse to the interworking server.

An example of the message of SSP: SendMessageResponse is as follows.

```
   HTTP/1.1 200 OK
   Server: Resin/2.1.12
   Content-Length: 326
   Date: Thu, 26 May 2005 02:41:10 GMT
   <WV-SSP-Message
 xmlns="http://www.openmobilealliance.org/DTD/WV-SSP1.2">
   <Session sessionID="d432fa84b4c76e66710@IMPS.com">
    <Transaction mode="Response" transactionID="45">
    <SendMessage-Response MessageID=1>
    <Status code="200"/>
    </ SendMessage-Response >
    </Transaction>
    </Session>
    </WV-SSP-Message>
```

E: Upon reception of the response message, the interworking server sends to the SIP/SIMPLE IM server an SIP response message, i.e. a message of SIP: 200 OK.

An example of the message of SIP: 200 OK is as follows.

```
   SIP/2.0 200 OK
   From: sip:userA@SIMPLE.com; tag=49583
   To: wv:conf1@IMPS.com
   Call-ID: d432fa84b4c76e66710
   CSeq: 51 MESSAGE
   Content-Length: 0
```

F: The SIP/SIMPLE IM server relays the received message of SIP: 200 OK to the client of the SIP/SIMPLE IM user.

The procedure in which the SIP/SIMPLE IM user joins in the chat room in the WV IMPS instant message system and presents an opinion has been described in details. Since the WV IMPS instant message system does not support the MSRP, no MSRP channel can be established between the interworking server and the WV IMPS server, i.e., the interworking server and the WV IMPS server shall interact through an SSP message.

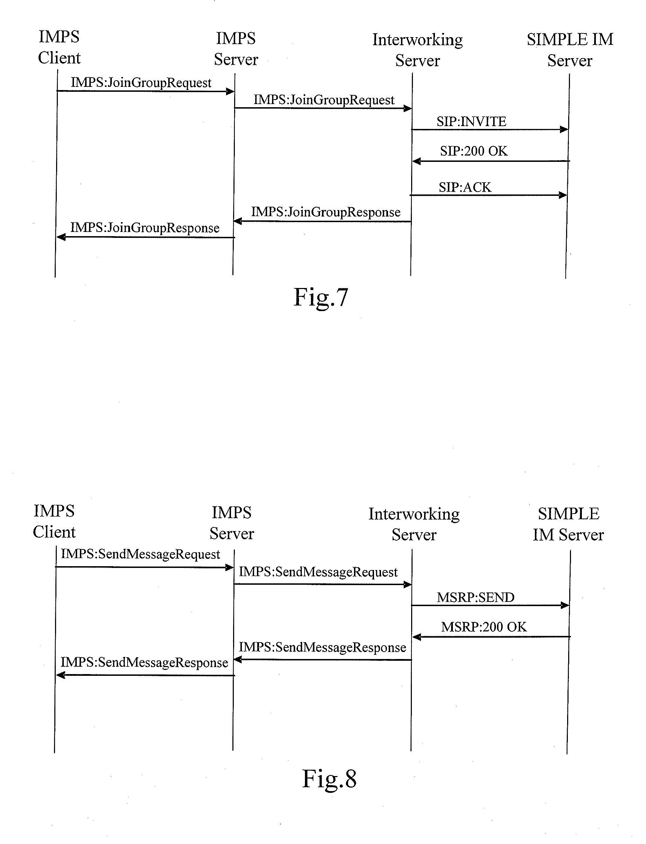

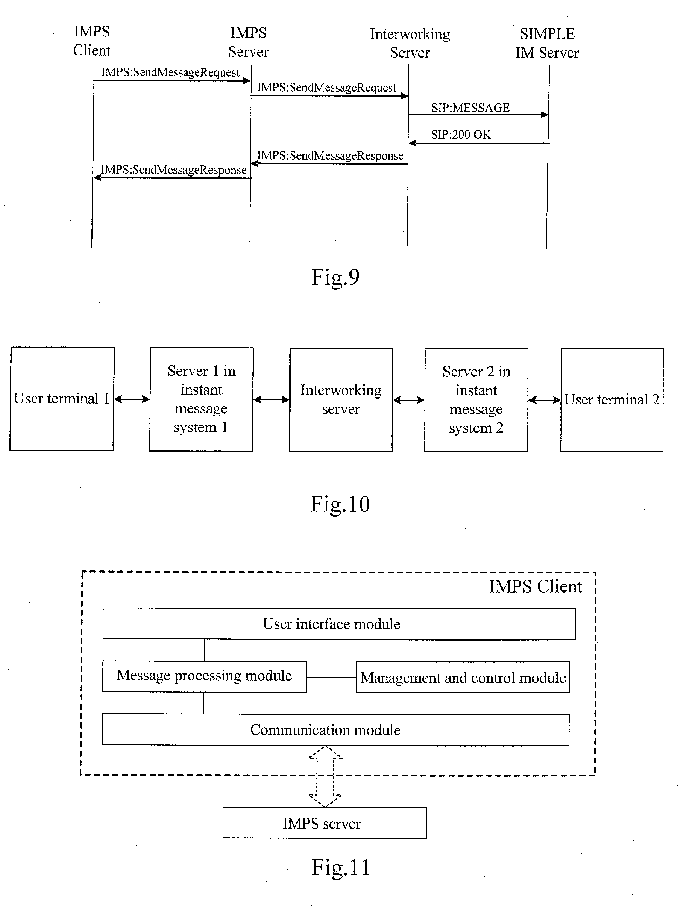

For an implementation solution in which a WV IMPS user joins in a chat room in an SIP/SIMPLE instant message system, the basic flow is the same as that illustrated in Figure 2 except that messages for relay are different. Further, since the WV IMPS instant message system does not support the MSRP, the WV IMPS user and the interworking server can not have any MSRP channel established therebetween and thus can interact only through WV SSP messages. However, the interworking server and the server in the system to which the chat room belongs, i.e. the SIP/SIMPLE IM server, may have an MSRP channel established therebetween, i.e. may interact through an MSRP message. A specific flow will be described below only in connection with timing of message flow in which a WV IMPS user joins in a chat room in an SIP/SIMPLE instant message system and presents an opinion. Here, a timing diagram of message flow illustrating that the WV IMPS user requests for joining in the SIP/SIMPLE IM chat room is illustrated in Figure 7, a timing diagram of message flow illustrating that the WV IMPS user enters the chat room and presents an opinion through an MSRP channel established between the terminal and the interworking server is illustrated in Figure 8, and a timing diagram of message flow illustrating that the WV IMPS user presents an opinion through relaying by the IMPS server is illustrated in Figure 9.

As illustrated in Figure 7, the timing diagram of message flow illustrating that the WV IMPS user requests for joining in the SIP/SIMPLE IM chat room is as follows.

A: The WV IMPS user sends a message of CSP (Client to Server Protocol) JoinGroupRequest, i.e. a message of IMPS: JoinGroupRequest, requesting for joining in the chat room to the WV IMPS server through the terminal.

It has been specified in the WV IMPS instant message system that the user terminal shall communicate with the server through a CSP message.

An example of the message of IMPS: JoinGroupRequest is as follows.

```
   POST 10.164.5.254:8080 HTTP/1.1
   Content-Type: application/vnd.wv.csp.xml
   Content-Length: 634
   <WV-CSP-Message
 xmlns=''http://www.openmobilealliance.org/DTD/WV-CSP1.2''>
   <Session>
   <SessionDescriptor>
   <SessionType>Inband</SessionType>
   <SessionID>d432fa84b4c76e66711@IMPS.com</SessionID>
   </SessionDescriptor>
   <Transaction>
   <TransactionDescriptor>
   <TransactionMode>Request</TransactionMode>
   <TransactionID>50UserB@IMPS.com</TransactionID>
   </TransactionDescriptor>
   <TransactionContent
 xmlns="http://www.openmobilealliance.org/DTD/WVTRC1.2">
    <JoinGroup-Request>
    <GroupID>sip:conf2@SIMPLE.com</GroupID>
    <JoinedRequest>F</JoinedRequest>
    <SubscribeNotification>F</SubscribeNotification>
    </JoinGroup-Request>
    </TransactionContent>
   </Transaction>
   </Session>
   </WV-CSP-Message>
```

B: The WV IMPS server relays the message of IMPS: JoinGroupRequest to the interworking server via a WV SSP message.

Upon reception of the message of IMPS: JoinGroupRequest, the WV IMPS server determines that the message is a message for relay to the SIMPLE IM server according to the name of the chat room carried in the message. Since the IMPS server shall communicate with the interworking server through a WV SSP message, the WV IMPS server converts the message into a WV SSP message and thereafter relays the converted message to the interworking server.

An example of the message of SSP JoinGroupRequest is as follows.

```
   POST 10.164.5.254:8080 HTTP/1.1
   Content-Type: application/vnd.wv.ssp.xml
   Content-Length: 448
   <WV-SSP-Message
 xmlns="http://www.openmobilealliance.org/DTD/WV-SSP1.2">
   <Session sessionID="d432fa84b4c76e66711@IMPS.com">
   <Transaction mode="Request" transactionID="50">
   <JoinGroup-Request GroupID = "sip:conf2@SIMPLE.com" JoinedRequest =
 "F" SubscribeNotification = "F">
  <MetaInfo clientOriginated="Yes">
  <Requestor>
  <User userID="wv:UserB@IMPS.com ">
  </User>
    </Requestor>
    </MetaInfo>
    </ JoinGroup-Request >
    </Transaction>
   </Session>
   </WV-SSP-Message>
```

C: Upon reception of the message, the interworking server analyzes and determines that it is a request message for joining in the chat room in the SIP/SIMPLE instant message system and thereafter converts the WV SSP message of the WV IMPS into an SIP/SIMPLE message, i.e. a message of SIP: INVITE and sends the converted message to the SIP/SIMPLE IM server.

An example of the message of SIP: INVITE is as follows.

```
   INVITE sip:conf2@SIMPLE.com SIP/2.0
             To: < sip:conf2@SIMPLE.com>
             From: impsB <wv:UserB@IMPS.com>;tag=32331
   Call-ID: d432fa84b4c76e66711
             CSeq: 50 INVITE
             Contact: <wv:UserB@IMPS.com; sessiontype=chat>; isfocus
             Allow: INVITE, ACK, CANCEL, BYE, REFER, MESSAGE,
 SUBSCRIBE, NOTIFY
             Allow-Events: dialog
             Content-Type: application/sdp
              v=0
              c=IN IP4 UserB.IMPS.com
              t=0 0
              m=message 7777 msrp/tcp *
              a=accept-types:text/plain
              a=path:msrp://UserB.IMPS.com:7777/iau39;tcp
```

D: Upon reception of the message of SIP: INVITE, the SIP/SIMPLE IM server processes the joining request. Assuming that the user joins with success, the server returns a message of SIP: 200 OK indicating successful joining to the interworking server.

An example of the message of SIP: 200 OK is as follows.

```
    IP/2.0 200 OK
             To: < sip:conf2@SIMPLE.com>; tag=733413
             From: simpleA<wv:UserB@IMPS.com>;tag=32331
    Call-ID: d432fa84b4c76e66711
             CSeq: 50 INVITE
             Contact: <wv:UserB@IMPS.com; sessiontype=chat>; isfocus
             Allow: INVITE, ACK, CANCEL, BYE, REFER, MESSAGE,
 SUBSCRIBE, NOTIFY
             Allow-Events: dialog
             Content-Type: application/sdp
   v=0
         s=-
         c=IN IP4 conf2.SIMPLE.com
         t=0 0
       m=message 8888 msrp/tcp *
         a=accept-types:text/plain
         a=path:msrp://conf2.SIMPLE.com:8888/9di4ea;tcp
```

E: Upon reception of the response message of SIP: 200 OK, the interworking server sends to the SIM/SIMPLE IM server a message of SIP: ACK notifying of reception of the message of SIP: 200 OK by the present interworking server, and returns to the WV IMPS server a WV SSP message of the WV IMPS indicating that the user has been added into the chat room, i.e. a message of IMPS: JoinGroupResponse.

An example of the message of SSP IMPS: JoinGroupRespnse is as follows.

```
   HTTP/1.1 200 OK
   Server: Resin/2.1.12
   Content-Length: 276
   Date: Thu, 26 May 2005 02:41:10 GMT
   <WV-SSP-Message
 xmlns="http://www.openmobilealliance.org/DTD/WV-SSP1.2">
   <Session sessionID="d432fa84b4c76e66711@IMPS.com">
   <Transaction mode="Response" transactionID="50">
    <JoinGroup-Response>
    <Status code="200"/>
    </ JoinGroup-Response >
    </Transaction>
    </Session>
    </WV-SSP-Message>
```

F: Upon reception of the response message, the WV IMPS server returns to the terminal of the WV IMPS user a CSP message acknowledging the joining into the chat room, i.e. a message of IMPS: JoinGroupRespnse.

An example of the message of IMPS: JoinGroupRespnse is as follows.

```
   HTTP/1.1 200 OK
   Server: Resin/2.1.12
   Content-Length: 534
   Date: Thu, 26 May 2005 02:41:10 GMT
   <WV-CSP-Message
 xmlns="http://www.openmobilealliance.org/DTD/WV-CSP1.2">
   <Session>
   <SessionDescriptor>
   <SessionType>Inband</SessionType>
   <SessionID> d432fa84b4c76e66711@IMPS.com </SessionID>
   </SessionDescriptor>
   <Transaction>
   <TransactionDescriptor>
   <TransactionMode>Response</TransactionMode>
   <TransactionID>50UserB@IMPS.com</TransactionID>
   </TransactionDescriptor>
   <TransactionContent
 xmlns="http://www.openmobilealliance.org/DTD/WVTRC 1.2">
   <JoinGroup-Response>
   </JoinGroup-Response>
   </TransactionContent>
   </Transaction>
    </Session>
    </WV-CSP-Message>
```

If in the previous process, the interworking server requests for establishing an MSRP channel between the interworking server and the SIP/SIMPLE IM server, and the MSRP channel has been established with success, then the WV IMPS user presents an opinion via the message flow illustrated in Figure 8. The procedure is as follows.

A: The WV IMPS user sends a chat message to the interworking server through a client, i.e., the message of CSP IMPS: SendMessageRequest.

An example of the message of CSP IMPS: SendMessageRequest is as follows.

```
   POST 10.164.5.254:8080 HTTP/1.1
   Content-Type: application/vnd.wv.csp.xml
   Content-Length: 928
   <WV-CSP-Message
 xmlns="http://www.openmobilealliance.org/DTD/WV CSP1.2">
   <Session>
   <SessionDescriptor>
   <SessionType>Inband</SessionType>
   <SessionID> d432fa84b4c76e66711@IMPS.com </SessionID>
   </SessionDescriptor>
   <Transaction>
   <TransactionDescriptor>
   <TransactionMode>Request</TransactionMode>
   <TransactionID>51 UserB@IMPS.com </TransactionID>
   </TransactionDescriptor>
   <TransactionContent
 xmlns="http://www.openmobilealliance.org/DTD/WVTRC 1.2">
   <S endMessage-Request>
   <DeliveryReport>F</DeliveryReport>
   <MessageInfo>
  <ContentType>text/plain</ContentType>
   <ContentEncoding>None</ContentEncoding>
  <ContentSize>21 </ContentSize>
    <Recipient>
    <Group>
    <ScreenName>
   <GroupID>sip:conf2@SIMPLE.com</GroupID>
   </ScreenName>
   </Group>
   <Sender>
   <User>
   <UserID>wv:UserB@IMPS.com</UserID>
   </User>
   </Sender>
   <Validity>600</Validity>
   </MessageInfo>
   <ContentData>
   Hi, I am a IMPS user!
   </ContentData>
   </SendMessage-Request>
   </TransactionContent>
   </Transaction>
   </Session>
   </WV-CSP-Message>
```

B: Upon reception of the CSP message, the WV IMPS server analyzes and knows that the chat room corresponding to the message is in the SIP/SIPMILE instant message system, and therefore sends a message of WV SSP IMPS: SendMessageReuqest to the interworking server.

An example of the message of WV SSP IMPS: SendMessageReuqest is as follows.

```
   POST 10.164.5.254:8080 HTTP/1.1
  Content-Type: application/vnd.wv.ssp.xml
  Content-Length: 653
  <WV-SSP-Message
 xmlns="http://www.openmobilealliance.org/DTD/WV SSP1.2">
    <Session sessionID="d432fa84b4c76e66711@IMPS.com">
    <Transaction mode="Request" transactionID="51 ">
    <SendMessage-Request DeliveryReport = "F">
   <MetaInfo clientOriginated="Yes">
   <Requestor>
   <User userID="wv:UserB@ IMPS.com ">
   </User>
   </Requestor>
   </Metalnfo>
   <Messagelnfo messageID ="12349sdqwer" contentType = "text/plain" contentSize
 = 21>
   <Recipient>
   <Group>
   <ScreenName>
   <GroupID> sip:conf2@SIMPLE.com </GroupID>
   </S creenName>
   </Group>
   </Recipient>
   <Sender>
   <User>
   <UserID>wv:UserB@IMPS.com</UserID>
   </User>
   </Sender>
   </MessageInfo>
   <ContentData>
   Hi, I'm a IMPS userB!
   </ContentData>
   </SendMessage-Request>
   </Transaction>
   </Session>
   </WV-SSP-Message>
```

C: The interworking server converts the message of WV SSP IMPS: SendMessageRequest into an MSRP message, i.e. a message of MSRP: SEND, and sends the converted message to the SIP/SIMPLE IM server through the MSRP channel.

An example of the message of MSRP: SEND is as follows.

```
    MSRP d888kswow SEND
    To-Path:msrp://conf2.SIMPLE.com:8888/9di4ea;tcp
    From-Path:msrp://UserB.IMPS.com:7777/iau39;tcp
   Message-ID: 12349sdqwer
   Content-Type: text/plain
   Hi, I'm a IMPS userB!
   ------- d888kswow$
```

D: The SIP/SIMPLE IM server processes the received message of MSRP: SEND and returns a corresponding response message, i.e. a message of MSRP: 200 OK through the MSRP channel.

An example of the message of MSRP: 200 OK is as follows.

```
   MSRP d888kswow 200 OK
   To-Path:msrp://conf2.SIMPLE.com:8888/9di4ea;tcp
   From-Path:msrp://UserB.IMPS.com:7777/iau39;tcp
   ------- d888kswow$
```

E: The interworking server converts the received message of MSRP: 200 OK into a WV SSP message of the WV IMPS, i.e. a message of IMPS: SendMessageResponse, and sends the converted message to the IMPS server.

An example of the message of IMPS: SendMesageResponse is as follows.

```
   HTTP/1.1 200 OK
   Server: Resin/2.1.12
   Content-Length: 304
   Date: Thu, 26 May 2005 02:41:10 GMT
   <WV SSP-Message
 xmlns="http://www.openmobilealliance.org/DTD/WV-SSP1.2">
   <Session sessionID="d432fa84b4c76e66711@IMPS.com">
   <Transaction mode="Response" transactionID="51 ">
   <SendMessage-Response MessageID= "12349sdqwer">
   <Status code="200"/>
    </ SendMessage-Response >
    </Transaction>
    </Session>
    </WV-SSP-Message>
```

F: Upon reception of the message of IMPS: SendMesageResponse, the WV IMPS server responds to the terminal of the WV IMPS user with a CSP response message.

An example of the message of IMPS: SendMesageResponse is as follows.

```
   HTTP/1.1 200 OK
    Server: Resin/2.1.12
   Content-Length: 534
   Date: Thu, 26 May 2005 02:41:10 GMT
   <WV-CSP-Message
 xmlns="http://www.openmobilealliance.org/DTD/WV CSP1.2">
   <Session>
   <SessionDescriptor>
   <SessionType>Inband</SessionType>
   <SessionID> d432fa84b4c76e66711@IMPS.com </SessionID>
   </SessionDescriptor>
   <Transaction>
   <TransactionDescriptor>
   <TransactionMode>Response</TransactionMode>
   <TransactionID>51UserB@IMPS.com</TransactionID>
   </TransactionDescriptor>
   <TransactionContent
 xmlns="http://www.openmobilealliance.org/DTD/WVTRC1.2">
   <SendMessage-Response>
   <Result>
   <Code>200</Code>
   </Result>
   <MessageID> 12349sdqwer </MessageID>
   </SendMessage-Response>
    </TransactionContent>
    </Transaction>
    </Session>
    </WV CSP-Message>
```

If the interworking server fails to establish the MSRP channel between the interworking server and the SIP/SIMPLE IM server in the previous process, the WV IMPS user presents an opinion via the message flow illustrated in Figure 9 in which as compared with Figure 8, the interworking server and the SIP/SIMPLE IM server can not interact through the MSRP channel, i.e. can not interact through an MSRP message, but interact through an SIP/SIMPLE message. In other words, the interworking server shall convert the message of IMPS: SendMessageRequest sent from the WV IMPS server into a message of SIP: MESSAGE instead of the message of MSRP: SEND after receiving the message and before sending the message to the SIP/SIMPLE IM server; and the SIP/SIMPLE IM server returns a message of MSRP: 200 OK instead of the message of MSRP: 200 OK when returning a response message to the interworking server.

For the solutions according to embodiments of the present invention, a plurality of interworking servers may be arranged. In this case, the SIP/SIMPLE IM server shall select one among the interworking servers before relaying the request for joining in the chat room to the interworking server. Specifically, interworking servers corresponding to respective SIP/SIMPLE IM servers may be preconfigured, and the respective SIP/SIMPLE IM servers may select corresponding one of the interworking servers according to the pre-configuration. Alternatively, interworking servers corresponding to respective chat rooms may be preconfigured, and the respective SIP/SIMPLE IM servers may determine corresponding one of the interworking servers according to the chat room into which the user requests for joining.

Since there also may be a plurality of WV IMPS servers in the WV IMPS instant message system, the interworking server shall select one of the WV IMPS servers before relaying a message, which may be similar to selection of an interworking server described above. Specifically, WV IMPS servers corresponding to respective interworking servers may be preconfigured, and the respective interworking servers may select corresponding one of the interworking servers according to the pre-configuration. Alternatively, WV IMPS servers corresponding to respective chat rooms may be preconfigured, and the respective interworking servers may determine corresponding one of the WV IMPS servers according to the chat room into which the user requests for joining. Of course, if an interworking gateway is present at the WV IMPS server, the interworking server may also send the request to the interworking gateway, and the interworking gateway may perform corresponding relaying.

In order to implement the processing flows above, the solutions according to embodiments of the present invention is required to add corresponding functions in respective servers and terminals and add an interworking server in the system. The interworking server may be arranged in any instant message system. For example, the interworking server may be arranged in the same physical device as a chat room server in the instant message system. Of course, the interworking server may also be arranged separately. Taking the separation arrangement as an example, the structure of a system according to embodiments of the present invention is illustrated in Figure 10. The system according to embodiments of the present invention includes servers and user terminals in existing instant message systems and the added interworking server.

Here, a user terminal in an instant message system is required to be capable of sending a request message for joining in a chat room in an instant message system to which the user does not belong to a server in an instant message system to which the user belongs according to user input or inquired information of the chat room, in addition to receiving a response message returned from the server in the instant message system to which the user belongs. The user terminal also sends a message related to the chat room to the interworking server and receives a message related to the chat room returned from the interworking server.

A server in the instant message system relays to the interworking server the request message for joining in the chat room in the instant message system to which the server does not belong, which is sent from the user terminal in the instant message system to which the server belongs, and sends the response message returned from the interworking server to the user terminal; and also receives a request message of a user terminal in the instant message system to which the server does not belong for joining in a chat room in the instant message system to which the server belongs, which is sent from the interworking server, determines whether to allow the user terminal to join the chat room, and then returns a corresponding response message to the interworking server.

The interworking server added in the solutions according to embodiments of the present invention converts the request message and a message related to the chat room sent from the instant message system to which the user terminal belongs into a message identifiable by the instant message system to which the chat room belongs and sends the converted message to a server in the instant message system to which the chat room belongs; and also converts the response message returned from the server in the instant message system to which the chat room belongs into a message identifiable by the system to which the user terminal belongs and sends the converted message to the instant message system to which the user terminal belongs. Here, the request message sent from the instant message system to which the user terminal belongs shall be relayed through the server in the system, and a message related to the chat room may also be relayed through the server, but may also be sent from the user terminal to the interworking server directly through a corresponding MSRP channel, if present, established by the interworking server for the user terminal.

The three devices in the system according to embodiments of the present invention will be described in details below respectively.

Currently, a terminal of an instant message system includes a communication module, a message processing module, a management and control module, and a user interface module. Here, the communication module is adapted to communicate with a server in the instant message system, to send a request message, to receive a response message, to convert a received message into an internal message and send the internal message to the message processing module, to receive a notification message sent from the server on its own initiative, etc. The message processing module is adapted to process all messages, for example, to create a request message and instruct the communication module to send the request message, to receive and process a response message sent from the communication module, to send a request message to the management and control module if service needs, to send to the user interface module a message for display or a user prompt message, to process a message sent from the user interface module, etc. The management and control module is adapted to manage and control service of chat room, for example, to authenticate an access of a user, to buffer information of friends of the user, to manage and maintain information of a chat room used by the user, to buffer the information of the chat room, to manage information of persons who enter the chat room, etc. The user interface module is adapted to display a list of friends, to display a list of chat rooms, to display persons who enter the chat room, to display chat contents, to provide an invitation function, to provide the user with a function of entering the chat room and a function of maintaining the list of friends, etc.

In the solutions according to embodiments of the present invention, the user terminal is provided with additional corresponding functions. For example, the user interface module is further adapted to provide the user with a function of inputting/inquiring information of a chat room in another system, to send information of a selected chat room to the message processing module, and to display to the user terminal not belonging to the instant message system but being in a chat room of the instant message system.

The message processing module is further adapted to generate a corresponding request message and a message related to the chat room according to information of the chat room sent from the user interface module, to send the message to a server belonging to the instant message system through the communication module, to receive a response message and a message related to the chat room sent from the communication module, and to perform corresponding processing on the received message.

The communication module is further adapted to send the message sent from the message processing module to the server belonging to the instant message system, and to send a response message and a message related to the chat room sent from the server to the message processing module.

The management and control module is still adapted to manage information related to the chat room used by the user.

Further, if the user terminal wishes direct message-interaction with the interworking server through an MSRP channel, the user terminal may generate a request message for establishing an MSRP channel and send the request message to the interworking server through the server, and receive a message related to the chat room sent from the interworking server through the MSRP channel and send information related to the chat room to the interworking server through the MSRP channel. Specifically, the message processing module may generate a request message for establishing an MSRP channel and send the request message to the server through the communication module. Correspondingly, the message processing module may generate and send an MSRP message to the interworking server through the MSRP channel and receive an MSRP message sent from the interworking server.

The structure of a terminal in the solutions according to embodiments of the present invention is illustrated in Figure 11.

Currently, a server in an instant message system includes a message access module, a message processing module, a management and control module, and an information storage module. Here, the message access module is adapted to interact with a user terminal, to receive a request message and a response message sent from the user terminal, and to send a message to the user terminal if the message processing module requests. The message processing module is adapted to process a message from the user terminal, to generate a corresponding response message, to instruct the message access module to send the corresponding response message to the message access module; to send a request message to the management and control module if service needs, such as need for entering a chat room or need for obtaining information of a chat room, and to request the information storage module for storing a message or obtaining a message if service needs, such as need for storing a list of members in a chat room, black and white lists of the chat room, information of friends of a user, etc., or need for reading recorded information from the information storage module. The management and control module is adapted to management and control a chat room, such as to manage a chat room, to manage information of the chat room, to manage and control joining and quitting of persons into and from the chat room, and also to interact with the message processing module, such as to perform corresponding processing according to a message sent from the message processing module, to instruct the message processing module to relay user information, etc.

In the solutions according to embodiments of the present invention, the message access module is further adapted to receive a message sent from the interworking server, to send the message to the message processing module, and to send a message sent from the message processing module to the interworking server.

When a chat room corresponding to a request message sent from the user terminal is a chat room in another system, the message processing module is further adapted to relay the request message to the interworking server through the message access module, and to process a message relayed from the interworking server, such as to determine whether the message is allowed to be executed, through interacting with the management and control module and the information storage module.

The management and control module is further adapted to provide a function to manage and control joining of a user in another system into a chat room in an instant message system to which the user does not belong.

The information storage module is further adapted to store address information of the interworking server in addition to information of names, domain names of chat rooms, etc.

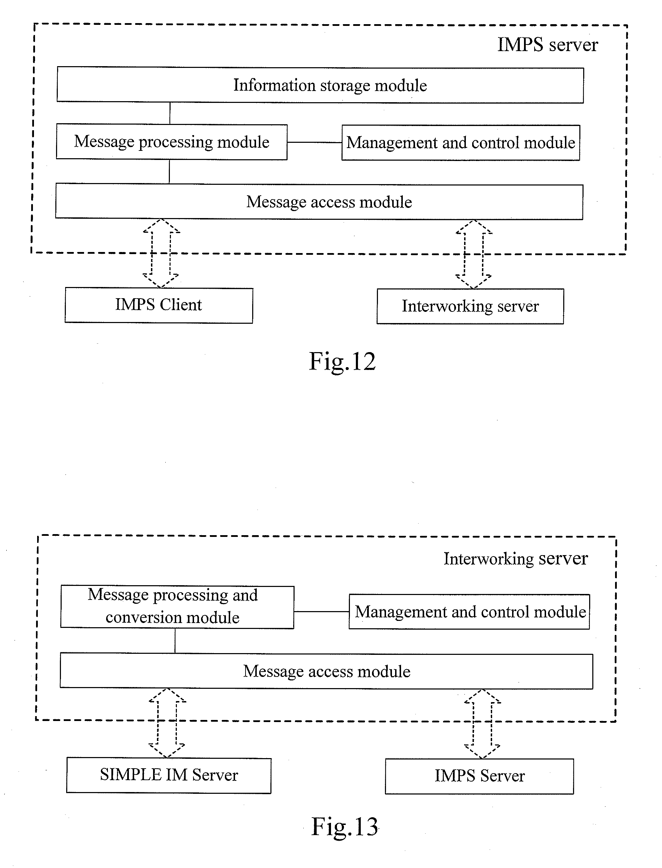

The structure of a server in the solutions according to embodiments of the present invention is illustrated in Figure 12.

The structure of an interworking server in the solutions according to embodiments of the present invention is illustrated in Figure 13. Specifically, the interworking server includes a message processing and conversion module, a management and control module, and a message access module.

Here, the message access module is adapted to interact with a server in an instant message system, to convert a message sent from the server into an internal message, to send the internal message to the message processing and conversion module, and to send a message sent from the message processing and conversion module to the server through a corresponding protocol.

The message processing and conversion module is adapted to determine a format into which a message is to be converted through interaction with the management and control module, and to send a corresponding message to the server through the message access module.

The management and control module is adapted to manage and control a chat room, such as to indicate a format into which a message is to be converted, to provide address information of a destination server, etc.

The objects, solutions and advantageous effects of the present invention have been described in further details with reference to the embodiments above. It is to be understood that the descriptions above are merely illustrative of the embodiments of the present invention but not limitative of the scope of the present invention. Any modifications, alternatives and changes made in light of the spirit and principle of the present invention shall fall within the scope of the present invention as defined in the appended claims.

## Claims

1. A method for using a chat room in an instant message system by an instant message user not belonging to the instant message system, comprising configuring an interworking server connected with servers in different instant message systems, the method further comprises:
after receiving, by a server in an instant message system, from a user terminal a request message for joining in a chat room in an instant message system to which the user terminal does not belong, relaying the request message to the interworking server;
converting, by the interworking server, the received request message into a request message identifiable by the instant message system to which the chat room belongs, and sending the converted request message to a server in the instant message system to which the chat room belongs;
after receiving, by the server in the instant message system to which the chat room belongs, the request message, determining whether to accept the joining request from the user terminal, and returning a corresponding response message to the interworking server;
converting, by the interworking server, the response message into a response message identifiable by the instant message system to which the user terminal belongs, sending the converted response message to the server in the instant message system to which the user belongs, and sending, by the server, the received response message to the user terminal; and
after determining, by the user terminal, successful joining according to the received response message, sending a message related to the chat room to the interworking server, converting, by the interworking server, the message and sending the converted message to the server in the instant message system to which the chat room belongs, receiving, by the interworking server, a message related to the chat room sent to the user terminal from the server in the instant message system to which the chat room belongs, and converting, by the interworking server, the message and sending the converted message related to the chat room to the user terminal.

2. The method according to claim 1, wherein the request message sent from the user terminal for joining in the chat room in the instant message system to which the user terminal does not belong is generated by the user terminal according to a user input/inquired identifier of the chat room.

3. The method according to claim 1, wherein before the relaying the request message to the interworking server, the method further comprises:
determining whether the received request message is a request message related to service of chat room, and if it is irrelevant to the service of chat room, ending the processing flow; and if it is relevant to the service of chat room, further determining whether the request message is a request message for the instant message system to which the user terminal belongs, if it is for the instant message system to which the user terminal belongs, performing normal processing; otherwise, sending the request message to the interworking server.

4. The method according to claim 1, wherein the server in the instant message system to which the chat room belongs stores control information of the chat room; and
the determining by the server in the instant message system to which the chat room belongs of whether to accept to the joining request from the user terminal comprises: determining whether to allow joining of the user terminal according to the stored control information of the chat room.

5. The method according to claim 4, wherein the control information of the chat room comprises any one or any combinations of black and white lists, an upper limit of the number of persons in the chat room, and control policy of the chat room.

6. The method according to claim 1, wherein the sending by the user terminal of the message related to the chat room to the interworking server comprises: sending, by the user terminal, the message to the server in the instant message system to which the terminal belongs, and sending, by the server, the message to the interworking server; and
the sending by the interworking server of the converted message related to the chat room to the user terminal comprises: sending, by the interworking server, the converted message to the server in the instant message system to which the user terminal belongs, and sending, by the server, the converted message to the user terminal.

7. The method according to claim 6, wherein the instant message system to which the user terminal belongs is an instant message system based upon an IP Multimedia Subsystem network, hereinafter referred to as IMS network, and messages interacted between the user terminal and the interworking server through the server are Session Initiation Protocol, hereinafter referred to as SIP, /SIP Instant Messaging and Presence Leveraging Extensions messages, hereinafter referred to as SIP/SIMPLE messages; or
the instant message system to which the user terminal belongs is an instant message system based upon a non-IMS network, messages interacted between the user terminal and the server in the instant message system to which the user terminal belongs are Wireless Village Client to Server Protocol messages, hereinafter referred to as WV CSP messages, and messages interacted between the server and the interworking server are Wireless Village Server to Server Protocol messages, hereinafter referred to as WV SSP messages.

8. The method according to claim 1, further comprising: sending, by the user terminal, a request message for establishing a data transmission channel dedicated for data transmission between the terminal and the interworking server when sending the request message for joining in the chat room in the instant message system to which the user terminal does not belong;
after the server sending the received response message to the user terminal, the method further comprises: after determining, by the interworking server, that the user terminal is capable of joining in the chat room according to the received response message, initiating establishing of the data transmission channel between the interworking server and the user terminal;
if the data transmission channel is established with success, returning information of the established data transmission channel to the user terminal; the sending by the user terminal of the message related to the chat room to the interworking server comprises: sending, by the user terminal, the message to the interworking server directly through the established data transmission channel; and the sending by the interworking server of the converted message related to the chat room to the user terminal comprises: sending, by the interworking server, the converted message to the user terminal directly through the established data transmission channel; and
if the data transmission channel is established with failure, the sending by the user terminal of the message related to the chat room to the interworking server comprises: sending, by the user terminal, the message to the server in the instant message system to which the terminal belongs, and sending, by the server, the message to the interworking server; and the sending by the interworking server of the converted message related to the chat room to the user terminal comprises: sending, by the interworking server, the converted message to the server in the instant message system to which the user terminal belongs, and sending, by the server, the message to the user terminal.

9. The method according to claim 8, wherein the instant message system to which the user terminal belongs is an instant message system based upon an IMS network, the data transmission channel established between the user terminal and the interworking server is a Message Session Relay Protocol, hereinafter referred to as MSRP, channel, and messages interacted between the user terminal and the interworking server are MSRP messages.

10. The method according to claim 1, wherein after the server sends the received response message to the user terminal, the method further comprises: determining, by the interworking server, whether joining is successful according to the received response message, and if so, initiating establishing of a data transmission channel dedicated for data transmission between the interworking server and the server in the system to which the chat room belongs; and
if the data transmission channel is established with success, performing message-interaction between the interworking server and the server in the instant message system to which the chat room belongs through the data transmission channel; and if the data transmission channel is not established with success, performing message-interaction between the interworking server and the server in the instant message system to which the chat room belongs through an existing channel.

11. The method according to claim 10, wherein the instant message system to which the chat room belongs is an instant message system based upon an IMS network, the data transmission channel established between the server in the instant message system to which the chat room belongs and the interworking server is an MSRP channel, and messages interacted between the server in the instant message system to which the chat room belongs and the interworking server are MSRP messages.

12. The method according to claim 7, 9 or 11, wherein the instant message system based upon the IMS network is an SIP/SIMPLE IM instant message system.

13. The method according to claim 1, wherein there are more than one interworking servers; and
before the relaying the request message to the interworking server, the method further comprises: selecting one from the arranged interworking servers as the present interworking server, and thereafter relaying the request message to the selected interworking server.

14. The method according to claim 13, wherein the method further comprises: allocating corresponding interworking servers for respective chat rooms; and the selected present interworking server is a corresponding interworking server determined according to the chat room into which the user terminal currently requests for joining; or
the method further comprises: allocating corresponding interworking servers for the respective servers in the instant message system; and the selecting of the present interworking server comprises: selecting one of the interworking servers corresponding to the present server according to the configuration.

15. The method according to claim 1, wherein there are more than one servers in the instant message system to which the chat room belongs; and
before the interworking server sends the converted message to the server in the instant message system to which the chat room belongs, the method further comprises: selecting one from the servers in the instant message system to which the chat room belongs as the present server.

16. The method according to claim 1, wherein there are more than one servers in the instant message system to which the chat room belongs, and an interworking gateway for the servers is arranged in the system; and
the sending by the interworking server of the converted message to the server in the instant message system to which the chat room belongs comprises: sending the converted message to the interworking gateway in the instant message system, and determining, by the interworking gateway, a corresponding server and sending the message to the determined server.

17. The method according to claim 1, wherein the instant message system is a Wireless Village Instant Message and Presence Service, hereinafter referred to as WV IMPS, instant message system or an SIP/SIMPLE instant message system.

18. A system for using a chat room in an instant message system by an instant message user not belonging to the instant message system, comprising a server and a user terminal in an instant message system, the user terminal having access to a chat room in an instant message system to which the user terminal belongs through a server in the instant message system to which the user terminal belongs, wherein the system further comprises an interworking server connected with servers in different instant message systems, and wherein:
the user terminal in the instant message system is further adapted to send a request message for joining in a chat room in an instant message system to which the user terminal does not belong to the server in the instant message system to which the user terminal belongs according to user input/inquired information of the chat room, to receive a response message returned from the server in the instant message system to which the user terminal belongs, to send a message related to the chat room to the interworking server, and to receive a message related to the chat room returned from the interworking server;
the server in the instant message system is further adapted to relay to the interworking server the request message for joining in the chat room in the instant message system to which the user terminal does not belong, which is sent from the user terminal not belonging to the instant message system, to send the response message returned from the interworking server to the user terminal, to determine whether to allow a user terminal not belonging to the instant message system to join in a chat room in the present instant message system according to a request message of the user terminal for joining in the chat room, which is sent from the interworking server, and to return a corresponding response message to the interworking server; and
the interworking server is adapted to convert the request message relayed from the server in the instant message system to which the user terminal belongs and a message related to the chat room sent from the user terminal into a message identifiable by the instant message system to which the chat room belongs, to send the converted message to a server in the instant message system to which the chat room belongs, to convert the response message returned from the server in the instant message system to which the chat room belongs into a message identifiable by the instant message system to which the user terminal belongs, and to send the converted message to the server or the user terminal in the instant message system to which the user terminal belongs.

19. The system according to claim 18, wherein the user terminal sends the message related to the chat room to the interworking server through the server in the instant message system to which the user terminal belongs and receives the message related to the chat room sent from the interworking server through the server.

20. The system according to claim 18, wherein the user terminal is further adapted to send a request message for establishing an MSRP channel to the interworking server through the server in the instant message system to which the user terminal belongs, to send the message related to the chat room to the interworking server through the established MSRP channel, and to receive the message related to the chat room sent from the interworking server through the MSRP channel; and
the interworking server is further adapted to establish the MSRP channel between the interworking server and the user terminal according to the received request message for establishing the MSRP channel, to receive the message related to the chat room sent from the user terminal through the MSRP channel, and to send the converted message to the user terminal directly through the MSRP channel.

21. The system according to claim 18, wherein the interworking server is further adapted to initiate establishing of an MSRP channel between the interworking server and the server in the instant message system to which the chat room belongs and to interact with the server in the instant message system to which the chat room belongs through the established MSRP channel.

22. The system according to claim 18, wherein the user terminal in the instant message system comprises a user interface module, a message processing module, a communication module, and a management and control module, and wherein:
the user interface module is adapted to provide a user with a function of inputting/inquiring about information of chat rooms in the instant message system to which the user terminal does not belong and to send information of a selected chat room to the message processing module;
the message processing module is adapted to generate a corresponding request message or a message related to the chat room according to the information of the chat room sent from the user interface module, to send the generated message to the server in the instant message system to which the user terminal belongs through the communication module, and to receive and process a response message and a message related to the chat room sent from the communication module; and
the communication module is adapted to send the message sent from the message processing module to the server in the instant message system to which the user terminal belongs and to send a response message and a message related to the chat room sent from the server to the message processing module.

23. The system according to claim 18, wherein the server in the instant message system comprises a message access module, a message processing module, a management and control module, and an information storage module, and wherein:
the message access module is adapted to receive the message sent from the user terminal or the interworking server, to send the message to the message processing module, and to send the message sent from the message processing module to the user terminal or the interworking server;
the message processing module is adapted to relay the request message sent from the user terminal to the interworking server through the message access module when the chat room corresponding to the request message is the chat room in the instant message system to which the user terminal does not belong and to process the response message relayed from the interworking server through interaction with the management and control module and the information storage module;
the information storage module is adapted to store address information of the interworking server and information related to chat rooms; and
the management and control module is adapted to provide a function to manage and control joining of the user not belonging to the instant message system into the chat room belonging to the instant message system.

24. The system according to claim 18, wherein the interworking server comprises a message processing and conversion module, a management and control module, and a message access module, and wherein:
the message access module is adapted to interact with the server in the instant message system, to convert the message sent from the server into an internal message and send the internal message to the message processing and conversion module, and to send a message sent from the message processing and conversion module to the server;
the message processing and conversion module is adapted to perform message format conversion through interaction with the management and control module and to send a corresponding message to the server through the message access module; and
the management and control module is adapted to determine a format for conversion of the message and an address of a destination server for the message.
